# EUROPEAN PATENT SPECIFICATION

(11) **EP 4 622 249 B1**
(45) Date of publication and mention of the grant of the patent: **25.11.2026**
(21) Application number: 23925051.7
(22) Date of filing: 06.12.2023
(51) Int. Cl.: H04N 9/31, G03B 21/20, G09G 3/00

(54) **PROJECTION DEVICE, COLOR GAMUT ADJUSTMENT METHOD AND APPARATUS THEREFOR, AND ELECTRONIC DEVICE**
PROJEKTIONSVORRICHTUNG, FARBRAUMEINSTELLVERFAHREN UND VORRICHTUNG DAFÜR UND ELEKTRONISCHE VORRICHTUNG
DISPOSITIF DE PROJECTION, PROCÉDÉ DE RÉGLAGE DE GAMME DE COULEURS ET APPAREIL ASSOCIÉ, ET DISPOSITIF ÉLECTRONIQUE

(30) Priority: 02.03.2023 CN 202310193147
(43) Date of publication of application: 24.09.2025
(73) Proprietor: XGIMI Technology Co., Ltd., Chengdu, Sichuan 610000 (CN)
(72) Inventor: PENG, Shuihai, Chengdu, Sichuan 610000 (CN)
(74) Representative: Grey, Ian Michael
(86) International application number: PCT/CN2023/136670
(87) International publication number: WO 2024/179106

(56) References cited:
- WO-A1-2019/024361
- WO-A1-2020/135305
- WO-A1-2021/027516
- WO-A1-2021/249516
- WO-A1-2021/249516
- CN-A- 110 941 135
- CN-A- 116 600 091
- KR-A- 20160 004 427
- US-A1- 2004 008 288

## Description

### TECHNICAL FIELD

The present application relates to the field of projection technology, and particularly to a projection device, a color gamut adjustment method and apparatus therefor, and an electronic device.

### BACKGROUND

Currently, projection devices are widely used in various scenarios, such as office presentations, playing audiovisual media, and installation art, and the projection effects required in different scenarios are not entirely the same. In projection scenarios primarily for displaying text and tables, the black-and-white contrast presented by luminance is the most important attribute; whereas in projection scenarios primarily for playing audiovisual media, whether the color gamut range can cover the standards of offline audiovisual content will strongly affect the image quality perceived by the user. In situations where it is difficult to balance luminance and color gamut range, current projection devices make trade-offs based on the application scenarios. For example, the current projection devices may achieve stronger luminance but a narrower color gamut range, or slightly weaker luminance but a wider color gamut range. However, this leads to a narrow application range for projection devices, making it difficult to apply them in different scenarios. Therefore, how to achieve a projection device that can be applied to a plurality of scenarios is one of the important issues in this field. Document WO2020135305A1 discloses a light source system, display device, and light source control method. Document US2004008288A1 discloses an adaptive image display. Document WO2021249516A1 discloses a projection display system.

### SUMMARY

In view of this, the present application provides a projection device, a color gamut adjustment method and apparatus therefor, and an electronic device, which achieve multi-mode display between color gamut and luminance according to specific scenes.

In a first aspect, the present application provides a color gamut adjustment method for a projection device, comprising:
acquiring a detection instruction or a driving instruction; and
adjusting an adjustable element according to the detection instruction or the driving instruction, such that under a condition that the detection instruction or the driving instruction satisfies a first preset condition, a first color light within a first color gamut is obtained after being filtered by the adjustable element, and under a condition that the detection instruction or the driving instruction satisfies a second preset condition, a first color light within a second color gamut is obtained after being filtered by the adjustable element, the requirement for projection luminance of the second preset condition being lower than that of the first preset condition, the first color light comprising at least one of red light, green light, and blue light,
wherein under a condition that the first color light comprises red light, a chromaticity coordinate x_{R1} of the red light within the first color gamut is less than a chromaticity coordinate x_{R2} of the red light within the second color gamut, and a chromaticity coordinate y_{R1} of the red light within the first color gamut is greater than a chromaticity coordinate y_{R2} of the red light within the second color gamut; under a condition that the first color light comprises green light, a chromaticity coordinate x_{G1} of the green light within the first color gamut is greater than a chromaticity coordinate x_{G2} of the green light within the second color gamut, and a chromaticity coordinate y_{G1} of the green light within the first color gamut is less than a chromaticity coordinate y_{G2} of the green light within the second color gamut; under a condition that the first color light comprises blue light, a chromaticity coordinate x_{B1} of the blue light within the first color gamut is greater than a chromaticity coordinate x_{B2} of the blue light within the second color gamut, a chromaticity coordinate y_{B1} of the blue light within the first color gamut is greater than a chromaticity coordinate y_{B2} of the blue light within the second color gamut, and the method further comprises: causing a first color light filtered by the adjustable element to at least comprise a first part and a second part under a condition that the detection instruction or the driving instruction satisfies a third preset condition, wherein the first part and the second part have different energies, and the third preset condition is an intermediate condition between the first preset condition and the second preset condition.

In a second aspect, the present application provides a projection device, comprising:
a light source, configured to emit source light, the source light comprising at least one of red light, green light, and blue light;
an adjustable element, configured to filter a first color light in the source light, such that under a condition that a detection instruction or a driving instruction satisfies a first preset condition, a first color light within a first color gamut is obtained after being filtered by the adjustable element, and under a condition that the detection instruction or the driving instruction satisfies a second preset condition, a first color light within a second color gamut is obtained after being filtered by the adjustable element, the requirement for projection luminance of the second preset condition being lower than that of the first preset condition, the first color light comprising at least one of red light, green light, and blue light, wherein under a condition that the first color light comprises red light, a chromaticity coordinate x_{R1} of the red light within the first color gamut is less than a chromaticity coordinate x_{R2} of the red light within the second color gamut, and a chromaticity coordinate y_{R1} of the red light within the first color gamut is greater than a chromaticity coordinate y_{R2} of the red light within the second color gamut; under a condition that the first color light comprises green light, a chromaticity coordinate x_{G1} of the green light within the first color gamut is greater than a chromaticity coordinate x_{G2} of the green light within the second color gamut, and a chromaticity coordinate y_{G1} of the green light within the first color gamut is less than a chromaticity coordinate y_{G2} of the green light within the second color gamut; under a condition that the first color light comprises blue light, a chromaticity coordinate x_{B1} of the blue light within the first color gamut is greater than a chromaticity coordinate x_{B2} of the blue light within the second color gamut, and a chromaticity coordinate y_{B1} of the blue light within the first color gamut is greater than a chromaticity coordinate y_{B2} of the blue light within the second color gamut; a light homogenizing element, configured to homogenize the source light; and a spatial light modulator, configured to modulate the homogenized source light according to image data to produce image light. The adjustable element at least comprises a first region and a second region, an energy transmission ratio in the first region being higher than an energy transmission ratio in the second region, wherein under a condition that the detection instruction or the driving instruction satisfies the first preset condition, the first color light entirely passes through the first region, and under a condition that the detection instruction or driving instruction satisfies the second preset condition, the first color light entirely passes through the second region; under a condition that the detection instruction or the driving instruction satisfies a third preset condition, a part of the first color light passes through the first region of the adjustable element, and a part of the first color light passes through the second region of the adjustable element, such that the first color light filtered by the adjustable element at least comprises a first part and a second part, wherein the first part and the second part have different energies, and the third preset condition is an intermediate condition between the first preset condition and the second preset condition.

In a possible embodiment, under a condition that the first color light comprises red light, 0.55 ≤ xR1 ≤ 0.72, 0.2 ≤ yR1 ≤ 0.5, x_{R2} > 0.6, and y_{R2} < 0.4; under a condition that the first color light comprises green light, 0.23 ≤ xG1 ≤ 0.31, 0.60 ≤ yG1 ≤ 0.66, xG2 < 0.28, and yG2 > 0.64; and under a condition that the first color light comprises blue light, 0.1 ≤ xB1 ≤ 0.3, 0.01 ≤ yB1 ≤ 0.5, xB2 < 0.15, and yB2 < 0.2.

In a possible embodiment, the method by which the adjustable element control module adjusts the adjustable element comprises: adjusting a position of the adjustable element by a motor, wherein a positional displacement step size of the adjustable element controlled by the motor ranges from 0.05 mm to 0.5 mm.

In a possible embodiment, the color gamut adjustment apparatus further comprises a light source control module, configured to adjust at least one of a current intensity and illumination time of a light source according to the detection instruction or the driving instruction, such that when adjusting the current intensity of the light source, a relative current value of the first color light source in a second mode is greater than the relative current value of the first color light source in a first mode, and when adjusting the illumination time of the light source, a proportion of illumination time of the first color light source in the second mode within one cycle is increased compared to the first mode, wherein the first mode corresponds to a first color light within a first color gamut, and the second mode corresponds to a first color light within a second color gamut.

In a fourth aspect, the present application provides an electronic device, comprising a memory, a processor, and a computer program stored on the memory, wherein the processor executes the computer program to implement the method described in the first aspect.

In a fifth aspect, the present application provides a computer-readable storage medium, on which a computer program is stored, wherein under a condition that the computer program is executed by a processor, the method described in the first aspect is implemented.

In a sixth aspect, the present application provides a computer program product, comprising computer-readable code, or a non-volatile computer-readable storage medium carrying computer-readable code, wherein when the computer-readable code runs in an electronic device, a processor in the electronic device executes the method described in the first aspect.

It should be noted that the projection device according to the second aspect, the apparatus according to the third aspect, the electronic device according to the fourth aspect, the storage medium according to the fifth aspect, and the computer program product according to the sixth aspect are used to execute the method according to the first aspect described above, and therefore can achieve the same beneficial effects as the method according to the first aspect, which will be repeated in the present application.

The present application can adjust the adjustable element according to a detection instruction or a drive instruction, such that the color gamut and/or luminance of the first color light obtained after being filtered by the adjustable element is adapted to the detection instruction or the drive instruction, achieving multi-mode display between color gamut and luminance according to specific scenes, and thus improving user experience.

### BRIEF DESCRIPTION OF THE DRAWINGS

Fig. 1 is a schematic diagram of functional modules of a projection device provided in embodiments of the present application;
Fig. 2 is a schematic structural diagram of the projection device provided in embodiments of the present application;
Fig. 3 is a schematic spectral diagram of an adjustable element provided in embodiments of the present application;
Fig. 4 is a schematic spectral diagram of another adjustable element provided in embodiments of the present application;
Fig. 5 is a flowchart of a color gamut adjustment method for a projection device provided in embodiments of the present application;
Fig. 6 is a schematic diagram of a color gamut of the projection device provided in embodiments of the present application; and
Fig. 7 is a schematic structural diagram of an electronic device provided in embodiments of the present application.

### DETAILED DESCRIPTION

To make those skilled in the art understand the technical solutions of the present application better, the technical solutions in the embodiments of the present application will be clearly and completely described below. Apparently, the described embodiments are merely a part rather than all of the embodiments of the present application. It should be understood that the specific embodiments described herein are merely intended to explain the present application, rather than to limit the present application. Although the disclosure in the present application is introduced according to one or several examples, it should be understood that various aspects of these disclosures may also individually constitute a complete technical solution. As long as there is no conflict, the following embodiments and the features in the embodiments can be combined with each other.

To thoroughly understand the present application, a detailed description will be provided below to explain the technical solutions of the present application. The preferred embodiments of the present application are described in detail as follows, however, in addition to these detailed descriptions, the present application may also include other embodiments.

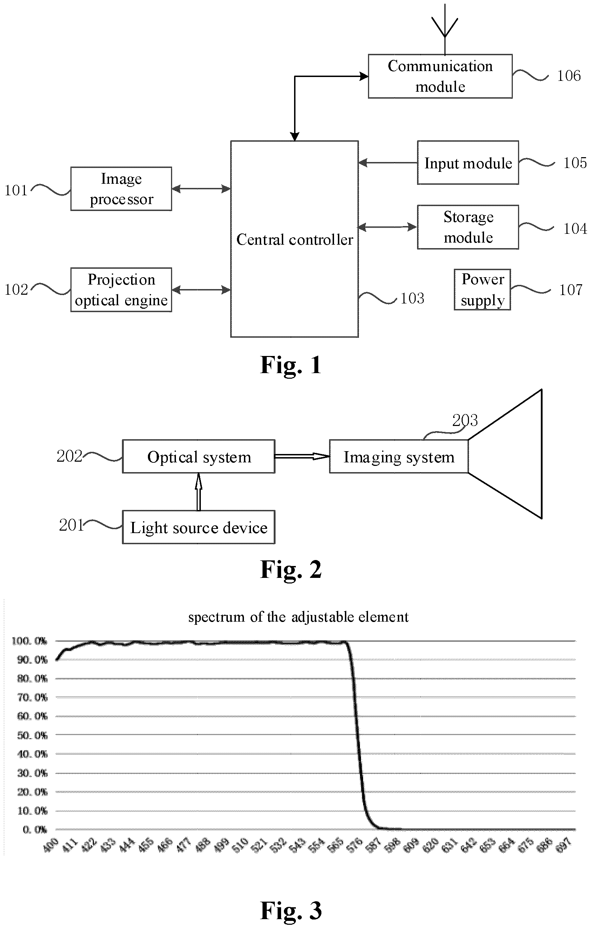

Fig. 1 is a schematic diagram of functional modules of a projection device provided in embodiments of the present application. As shown in Fig. 1, the projection device comprises an image processor 101 and a projection optical engine 102.

The image processor 101 may be a microcontroller or a dedicated image processing chip. The microcontroller may be an ARM chip or a microcontroller unit (MCU). The dedicated image processing chip may be an image signal processor (ISP), a graphics processing unit (GPU), or an embedded neural-network processing unit (NPU). The image processor 101 may be used for video decoding and image quality processing.

The projection optical engine 102 may include a driver chip, a spatial light modulator, and a light source. The light source may include a laser light source, an LED light source, or a fluorescent light source. The spatial light modulator may be a digital micromirror device (DMD), a liquid crystal display (LCD), or a liquid crystal on silicon (LCOS), which is used to modulate the source light to produce image light. The driver chip corresponds to the spatial light modulator. For example, the digital micromirror device may be driven by a digital light processing (DLP) element. The projection optical engine 102 is used to project the image to be projected into a projection screen.

In some embodiments, the projection device further comprises a central controller 103 with one or more processing cores. The central controller may be a controller such as CPU, ARM or MCU. The central controller 103, serving as the control center of the projection device, is connected to various parts of the entire projection device through various interfaces and lines, and can run or execute software programs and/or operating systems stored in a storage module 104, as well as call data stored in the storage module 104. Optionally, the image processor 101 and the central controller 103 may be integrated into one processor.

In some embodiments, the projection device further comprises a storage module 104 with one or more computer-readable storage media stored therein, an input module 105, a communication module 106, and a power supply 107. Those skilled in the art will appreciate that the structure of the projection device shown in Fig. 1 is not intended to limit the projection device, and may include more or fewer components than shown, or combine certain components, or have different component arrangements.

The storage module 104 may be used to store software programs and operating systems. The central controller 103 runs the software programs and operating systems stored in the storage module 104 to execute various functional applications and data processing. The storage module 104 may mainly comprise a storage program area and a storage data area. The storage program area may store operating systems and applications required for at least one function (such as sound playback function and image playback function). The storage data area may store data created according to the use of the projection device. In addition, the storage module 104 may include high-speed random access memory, and may further include non-volatile memory, such as at least one disk storage device, flash memory device, or other volatile solid-state storage devices. Correspondingly, the storage module 104 may further include a memory controller to provide the central controller 103 with the access to the storage module 104.

The projection device may further comprise an input module 105. The input module 105 may be used to receive input digital or character information, and to generate remote control, keyboard, mouse, joystick, optical or trackball signal inputs related to user settings and functional control.

The projection device may further comprise a communication module 106. In some embodiments, the communication module 106 may include a wireless module. The projection device may perform short-range wireless transmission through the wireless module of the communication module 106, thereby providing users with wireless broadband Internet access. For example, the communication module 106 may be used to help users access streaming media.

The projection device further comprises a power supply 107 that supplies power to various components. In some embodiments, the power supply 107 may be logically connected to the central controller 103 through a power management system, thereby implementing functions such as managing charging, discharging, and power consumption management using the power management system. The power supply 107 may further include one or more DC or AC power sources, recharging systems, power fault detection circuits, power converters or inverters, power status indicators, or any other components.

Fig. 2 is a schematic structural diagram of the projection device provided in embodiments of the present application. As shown in Fig. 2, the projection device comprises a light source device 201, an illumination optical system 202, and an imaging system 203. The light source device 201 includes one or more light sources. The illumination optical system 202 comprises optical elements configured to collimate and combine the source light, and a light homogenizing element configured to homogenize the source light, such as a light rod or a fly-eye lens. The light beam emitted from the light source device 201 is irradiated to a spatial light modulator (not shown in figures) via the illumination optical system 202. The spatial light modulator directs its incident light into the imaging system 203, and finally images the image light onto a projected body such as a screen. The imaging system 203 is generally a lens system, such as a projection lens.

In addition, the projection device may further comprise a light source control module (not shown in figures). The light source control module may control operations of one or more light sources in the light source device 201, such that the light source device 201 emits light of a specified waveband required at the time of image generation. Furthermore, the light source device 201, the illumination optical system 202, and the imaging system 203 may all be included in the projection optical engine 102 (referring to Fig. 1).

In the projection device, green light is an important factor affecting the projection effect. If enhanced projection luminance is required, the luminance of green light may be increased. In embodiments of the present application, an adjustable element is added to the projection device to filter green light. The adjustable element adjusts the energy transmission ratio for green light, such that in a display mode requiring high luminance, the energy transmission ratio for green light is increased, and in a display mode requiring a high color gamut, the purity of green light is increased, for example, by filtering out blue-shifted or red-shifted green light, thereby achieving a high color gamut display effect. Specifically, the adjustable element may be arranged in the light source device or the imaging system of the projection device, such as at the light combining position, the illumination position, the imaging position, the lens aperture position, the transformed scanner position (TSP), or the lens light exit position of the projection device. Preferably, the adjustable element is located between the light source and the light homogenizing element. Such a configuration can more effectively prevents the uniformity and the imaging effect of the projection screen from being affected during adjustment, and, when combined with the stepless adjustment of the adjustable element, can enable balanced adjustment of luminance and color gamut. It should be understood that, in addition to green light, the adjustable element may also be used to filter light of other colors, such as blue light or red light. If multiple colors of light are adjusted simultaneously, multiple adjustable elements may be used to filter different colors of light, respectively.

In some embodiments, the adjustable element is perpendicular to the optical axis direction, and can move to multiple positions corresponding to multiple settings. Different settings are located at different positions in the optical path, thereby obtaining a mixture of green light that passes through the adjustable element and green light that bypasses the adjustable element, ultimately producing the green light on the projection screen. Alternatively, the adjustable element may be steplessly adjusted, that is, a coverage area of the light spot by the adjustable element may be within the range of 0*CA to 1*CA of the light spot in the green light optical path, where CA represents the size of the light spot in the green light optical path, 0*CA indicates that all green light bypasses the adjustable element, and 1*CA indicates that all green light passes through the adjustable element.

Optionally, the adjustable element may be controlled by a motor or shutter control. If motor control is used, the number of motor steps corresponds to the mode, and the positional displacement step size of the adjustable element controlled by the motor ranges from 0.05 mm to 0.5 mm, for precise control of the position of the adjustable element. Exemplarily, the mapping relationship of the settings of the adjustable element is as follows:

the adjustable element is located in the green light optical path, allowing a part of the light to pass through the adjustable element while a part of the light bypasses it; the luminance of the part of the light passing through the adjustable element on the screen is L01, with the chromaticity coordinate (x01, y01); the luminance of the part of the light bypassing the adjustable element on the screen is L02, with the chromaticity coordinate (x02, y02); and the finally mixed luminance L = L01 + L02, x_mix = (L01*x01/x02 + L02*y01/y02)/(L01/y01 + L02/y02), y_mix = (L01 + L02)/(L01/y01 + L02/y02).

In some other embodiments, the adjustable element may comprise multiple regions, each having a distinct energy transmission ratio for green light. For example, the adjustable element is coated in regions, with different film systems coated on different regions. In this case, the adjustment of green light is achieved by controlling different regions of the adjustable element to be located in the green light optical path. The adjustable element may be circular, rectangular, or sector-shaped. For example, the adjustable element is circular, and in this case, the multiple regions of the adjustable element may be multiple sector-shaped regions circumferentially distributed, or multiple annular regions radially distributed. Alternatively, the adjustable element is sector-shaped, and in this case, the adjustable element may swing within a certain angle range without the need for a full rotation.

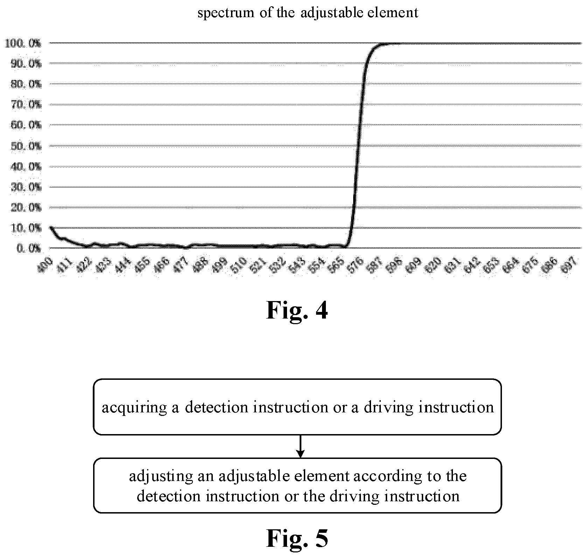

Exemplarily, the adjustable element comprises a first region and a second region with higher energy transmission ratio in the first region than in the second region. In this case, the projection device comprises at least two modes. In the first mode, all green light passes through the first region, achieving high luminance display. In the second mode, all green light passes through the second region, achieving high color gamut display. In an intermediate mode between the first mode and the second mode, a part of the green light passes through the first region, and a part of the green light passes through the second region, which are then mixed to produce the green light on the projection screen, thereby achieving a balanced luminance and color gamut display. Optionally, the first region is an aperture region or a transparent region, where no functional film is provided. The second region is a region where a functional film is provided. For example, the second region is provided with a low-pass high-blocking film having a spectral T50 of 574 ± 15 nm and a cut-off wavelength range of 592 nm to 660 nm, as shown in Fig. 3. When red light is filtered, the spectral T50 is 600 ± 15 nm, and the cut-off wavelength range ranges from 620 nm to 680 nm. When blue light is filtered, the spectral T50 is 475 ± 15 nm, and the cut-off wavelength range ranges from 500 nm to 660 nm. Alternatively, the second region is provided with a high-pass low-blocking film with the cut-off wavelength range ranging from 420 nm to 565 nm, as shown in Fig. 4. When red light is filtered, the cut-off wavelength range ranges from 420 nm to 590 nm. When blue light is filtered, the cut-off wavelength range ranges from 420 nm to 465 nm.

It should be understood that in the aforementioned embodiments, a part of the light passing through the adjustable element may correspond to the second region, while a part of the light bypassing the adjustable element may correspond to the first region. Furthermore, the adjustable element may also be an electrochromic element, whose characteristics change in response to changes in an external electric field, thereby adjusting the energy transmission ratio for green light.

Fig. 5 is a flowchart of a color gamut adjustment method for a projection device provided in embodiments of the present application. The color gamut adjustment method for the projection device may be implemented by the central controller 103 running or executing software programs and/or operating systems stored in the storage module 104, or may be implemented by the image processor 101 executing corresponding instructions. As shown in Fig. 5, the color gamut adjustment method for a projection device comprises the following steps.

S1001, a detection instruction or a driving instruction is obtained.

Exemplarily, the adjusting of the adjustable element may be triggered when the ambient light intensity information detected by a sensor satisfies a threshold value, when the content of the currently displayed screen being projected satisfies corresponding parameters, or by user selection.

S1002, the adjustable element is adjusted according to the detection instruction or the driving instruction.

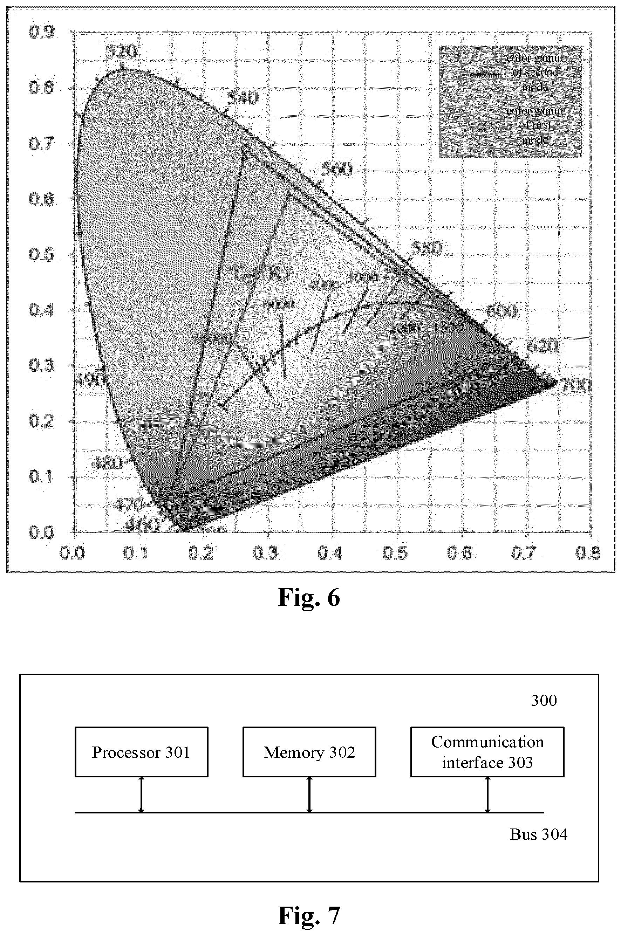

Exemplarily, the corresponding display mode may be matched based on the detection information, thereby driving the adjustable element, establishing a mapping from the detection information to the display mode and then to the state of the adjustable element. Assuming that the detection information is ambient light intensity information, when the detected ambient light intensity information exceeds a preset value, i.e., the requirement for projection luminance is high, such as being determined as daytime, the first mode is activated, such that the green light within the first color gamut is obtained after being filtered by the adjustable element, and its corresponding chromaticity coordinate is (x_{G1}, y_{G1}). In contrast, when the detected ambient light intensity information is not greater than the preset value, i.e., the requirement for projection luminance is low, such as being determined as nighttime, the second mode is activated, such that the green light within the second color gamut is obtained after being filtered by the adjustable element, and its corresponding chromaticity coordinate is (x_{G2}, y_{G2}), wherein the chromaticity coordinate x_{G1} of the green light within the first color gamut is greater than the chromaticity coordinate x_{G2} of the green light within the second color gamut, and the chromaticity coordinate y_{G1} of the green light within the first color gamut is less than the chromaticity coordinate y_{G2} of the green light within the second color gamut, as shown in Fig. 6. Optionally, 0.23 ≤ x_{G1} ≤ 0.31, 0.60 ≤ y_{G1} ≤ 0.66, x_{G2} < 0.28, y_{G2} > 0.64, thereby further improving the projection screen display effect.

In the aforementioned embodiments, the red chromaticity coordinate of the first mode is consistent with the red chromaticity coordinate of the second mode, and the blue chromaticity coordinate of the first mode is consistent with the blue chromaticity coordinate of the second mode, with only the green chromaticity coordinate differing. To achieve the same white field chromaticity coordinate, at least one of the current intensity and illumination time of the light source can be adjusted, such that when adjusting the current intensity of the light source, the relative current value of the green light source in the second mode is greater than the relative current value in the first mode, for example, by lowering the driving currents of the red and blue light sources while the driving current of the green light source remains unchanged, or by increasing the driving current of the green light source while the driving currents of the red and blue light sources remain unchanged. When adjusting the illumination time of the light source, the proportion of illumination time of the green light source in the second mode within one cycle is increased relative to the first mode, for example, by increasing the illumination time of the green light source in the second mode while decreasing the illumination times of the red and blue light sources, or by increasing the illumination times of the green and red light sources while decreasing the illumination time of the blue light source. The present embodiment can satisfy the preset white field chromaticity coordinate, ensuring better image quality.

It should be noted that if the adjustable element can be moved to multiple positions corresponding to multiple settings, the first mode and the second mode in the aforementioned embodiments may respectively correspond to the lowest setting and the highest setting among the multiple settings. One or more intermediate settings may exist between the lowest setting and the highest setting. In these intermediate settings, the green light filtered by the adjustable element at least comprises two parts having different energies, for example, a part of the green light passing through the adjustable element while another part of the green light bypassing the adjustable element. These two parts of the green light are then mixed to produce the green light on the projection screen. Furthermore, if the adjustable element allows stepless adjustment, when a change in the detected ambient light intensity exceeds a threshold value, the adjustable element may be adjusted such that the color gamut and/or luminance of the green light filtered by the adjustable element satisfy the requirements.

In some other embodiments, if red light is adjusted, the chromaticity coordinate of the red light corresponding to the first mode is (x_{R1}, y_{R1}), and the chromaticity coordinate of the red light corresponding to the second mode is (x_{R2}, y_{R2}), wherein, x_{R1} < x_{R2}, y_{R1} > y_{R2}. Optionally, 0.55 ≤ x_{R1} ≤ 0.72, 0.2 ≤ y_{R1} ≤ 0.5, x_{R2} > 0.6, y_{R2} < 0.4, thereby further improving the projection screen display effect. If blue light is adjusted, the chromaticity coordinate of the blue light corresponding to the first mode is (x_{B1}, y_{B1}), and the chromaticity coordinate of the blue light corresponding to the second mode is (x_{B2}, y_{B2}), where x_{B1} > x_{B2}, y_{B1} > y_{B2}. Optionally, 0.1 ≤ x_{B1} ≤ 0.3, 0.01 ≤ y_{B1} ≤ 0.5, x_{B2} < 0.15, y_{B2} < 0.2, thereby further improving the projection screen display effect.

Embodiments of the present application further provide a color gamut adjustment apparatus for a projection device, comprising:
a detection module, configured to detect a detection instruction or a driving instruction; and
an adjustable element control module, configured to adjust an adjustable element according to the detection instruction or the driving instruction, such that under a condition that the detection instruction or the driving instruction satisfies a first preset condition, a first color light within a first color gamut is obtained after being filtered by the adjustable element, and under a condition that the detection instruction or the driving instruction satisfies a second preset condition, a first color light within a second color gamut is obtained after being filtered by the adjustable element, the requirement for projection luminance of the second preset condition being lower than that of the first preset condition, the first color light comprising at least one of red light, green light, and blue light,
wherein under a condition that the first color light comprises red light, a chromaticity coordinate x_{R1} of the red light within the first color gamut is less than a chromaticity coordinate x_{R2} of the red light within the second color gamut, and a chromaticity coordinate y_{R1} of the red light within the first color gamut is greater than a chromaticity coordinate y_{R2} of the red light within the second color gamut; under a condition that the first color light comprises green light, a chromaticity coordinate x_{B1} of the green light within the first color gamut is greater than a chromaticity coordinate x_{G2} of the green light within the second color gamut, and a chromaticity coordinate y_{G1} of the green light within the first color gamut is less than a chromaticity coordinate y_{G2} of the green light within the second color gamut; under a condition that the first color light comprises blue light, a chromaticity coordinate x_{B1} of the blue light within the first color gamut is greater than a chromaticity coordinate x_{B2} of the blue light within the second color gamut, and a chromaticity coordinate y_{G1} of the blue light within the first color gamut is greater than a chromaticity coordinate y_{B2} of the blue light within the second color gamut.

Optionally, the adjustable element control module is further configured to, under a condition that the detection instruction or the driving instruction satisfies a third preset condition, cause the first color light filtered by the adjustable element to comprise at least a first part and a second part, wherein the first part and the second part have different energies, and the third preset condition is an intermediate condition between the first preset condition and the second preset condition.

Optionally, the color gamut adjustment apparatus further comprises a light source control module, configured to adjust at least one of a current intensity and illumination time of a light source according to the detection instruction or the driving instruction, such that when adjusting the current intensity of the light source, a relative current value of the first color light source in a second mode is greater than the relative current value of the first color light source in a first mode, and when adjusting the illumination time of the light source, a proportion of illumination time of the first color light source in the second mode within one cycle is increased compared to the first mode, wherein the first mode corresponds to a first color light within a first color gamut, and the second mode corresponds to a first color light within a second color gamut.

In an optional example, those skilled in the art will appreciate that the aforementioned apparatus may specifically be integrated into an electronic device. The electronic device may be a terminal, a server, or other devices. The terminal may be a projector, a smart TV, a laser TV, a mobile phone, a tablet computer, a smart Bluetooth device, a laptop computer, a desktop computer, or other devices. The server may be a single server or a server cluster composed of multiple servers. In some embodiments, the server may also be implemented in the form of a terminal. In some embodiments, the aforementioned apparatus may also be integrated into multiple electronic devices. For example, the color gamut adjustment apparatus for a projection device may be integrated into a terminal and a server, and the color gamut adjustment method for a projection device of the present application may be jointly implemented by the terminal and the server. The aforementioned apparatus may be used to execute various processes and/or steps of the aforementioned method. To avoid repetition, a detailed description is not provided herein.

It should be understood that the apparatus herein is embodied in the form of functional modules. The term "module" herein may refer to an application-specific integrated circuit (ASIC), an electronic circuit, a processor (e.g., a shared processor, a dedicated processor, or a group processor) and a memory for executing one or more software or firmware programs, a combined logic circuit, and/or other suitable components that support the described functions. The aforementioned apparatus has the function of implementing the corresponding steps in the aforementioned method, and these functions can be implemented by hardware, or by hardware executing corresponding software. The hardware or software includes one or more modules corresponding to the aforementioned functions. In embodiments of the present application, the aforementioned apparatus may also be a chip or a chip system, for example, a system on a chip (SoC). The present application is not limited in this regard.

Embodiments of the present application also provide an electronic device. Fig. 7 is a schematic structural diagram of an electronic device provided in embodiments of the present application. As shown in Fig. 7, the electronic device 300 comprises a processor 301, a memory 302, and a communication interface 303. The processor 301, the memory 302, and the communication interface 303 communicate with each other via a bus 304. The memory 302 stores instructions that can be executed by the processor 301. These instructions, when loaded and executed by the processor 301, control the communication interface 303 to transmit and/or receive signals.

It should be understood that, the electronic device 300 may specifically be the projection device in the aforementioned embodiments, or the functions of the projection device in the aforementioned embodiments may be integrated into the electronic device 300. The electronic device 300 may be used to execute the respective steps and/or processes corresponding to the projection device in the aforementioned embodiments. Optionally, the memory 302 may include read-only memory and random-access memory, and provide instructions and data to the processor 301. A part of the memory 302 may also include non-volatile random-access memory. For example, the memory 302 may also store device type information. The processor 301 may be used to execute instructions stored in the memory 302, and when the processor 301 executes the instructions, the processor 301 can execute the respective corresponding steps and/or processes in the method embodiments described above.

It should be understood that, in embodiments of the present application, the processor may be a central processing unit (CPU). The processor may also be another general-purpose processor, a digital signal processor (DSP), an application-specific integrated circuit (ASIC), a field-programmable gate array (FPGA) or another programmable logic device, discrete gate or transistor logic device, or discrete hardware component. A general-purpose processor may be a microprocessor, or the processor may also be any conventional processor.

In an implementation process, the steps of the aforementioned method may be completed using integrated logic circuits of hardware in the processor or by instructions in the form of software. The steps of the method disclosed in conjunction with the embodiments of the present application may be directly embodied as being executed and completed by a hardware processor, or executed and completed using a combination of hardware and software modules in the processor. The software module may be located in mature storage media in the art, such as a random-access memory, a flash memory, a read-only memory, a programmable read-only memory or an electrically erasable programmable memory, or a register. The storage medium is located in the memory. The processor executes the instructions in the memory and, in conjunction with its hardware, completes the steps of the aforementioned method. To avoid repetition, a detailed description is not provided herein.

The aforementioned embodiments may be entirely or partially implemented using software, hardware, firmware, or any other combination thereof. When implemented using software, the aforementioned embodiments may be entirely or partially implemented in the form of a computer program product. The computer program product includes one or more computer instructions or computer programs. When the computer instructions or computer programs are loaded or executed on a computer, the procedures or functions according to the embodiments of the present application are entirely or partially generated. The computer may be a general-purpose computer, a dedicated computer, a computer network, or other programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (e.g., infrared, wireless, or microwave) manner. The computer-readable storage medium may be any available medium that can be accessed by a computer or a data storage device such as a server or data center that includes a collection of one or more available media. The available medium may be a magnetic medium (e.g., floppy disk, hard disk, magnetic tape), an optical medium (e.g., DVD), or a semiconductor medium. The semiconductor medium may be a solid-state drive.

## Claims

1. A color gamut adjustment method for a projection device according to claim 5, comprising:
acquiring (S1001) a detection instruction or a driving instruction; and
adjusting (S1002) an adjustable element according to the detection instruction or the driving instruction, such that under a condition that the detection instruction or the driving instruction satisfies a first preset condition, a first color light within a first color gamut is obtained after being filtered by the adjustable element, and under a condition that the detection instruction or the driving instruction satisfies a second preset condition, a first color light within a second color gamut is obtained after being filtered by the adjustable element, a projection luminance requirement of the second preset condition being lower than that of the first preset condition, the first color light comprising at least one of red light, green light, and blue light, wherein
under a condition that the first color light comprises red light, a chromaticity coordinate x_{R1} of the red light within the first color gamut is less than a chromaticity coordinate x_{R2} of the red light within the second color gamut, and a chromaticity coordinate y_{R1} of the red light within the first color gamut is greater than a chromaticity coordinate y_{R2} of the red light within the second color gamut,
under a condition that the first color light comprises green light, a chromaticity coordinate x_{B1} of the green light within the first color gamut is greater than a chromaticity coordinate x_{G2} of the green light within the second color gamut, and a chromaticity coordinate y_{G1} of the green light within the first color gamut is less than a chromaticity coordinate y_{G2} of the green light within the second color gamut,
under a condition that the first color light comprises blue light, a chromaticity coordinate x_{B1} of the blue light within the first color gamut is greater than a chromaticity coordinate x_{B2} of the blue light within the second color gamut, and a chromaticity coordinate y_{B1} of the blue light within the first color gamut is greater than a chromaticity coordinate y_{B2} of the blue light within the second color gamut,
**characterized in that** the method further comprises:
causing a first color light filtered by the adjustable element to at least comprise a first part and a second part under a condition that the detection instruction or the driving instruction satisfies a third preset condition, wherein the first part and the second part have different energies, and the third preset condition is an intermediate condition between the first preset condition and the second preset condition.

2. The color gamut adjustment method for a projection device according to claim 1, wherein
under a condition that the first color light comprises red light, 0.55 ≤ x_{R1} ≤ 0.72, 0.2 ≤ y_{R1} ≤ 0.5, x_{R2} > 0.6, y_{R2} < 0.4;
under a condition that the first color light comprises green light, 0.23 ≤ x_{G1} ≤ 0.31, 0.60 ≤ y_{G1} ≤ 0.66, x_{G2} < 0.28, y_{G2} > 0.64;
under a condition that the first color light comprises blue light, 0.1 ≤ x_{B1} ≤ 0.3, 0.01 ≤ y_{B1} ≤ 0.5, x_{B2} < 0.15, y_{B2} < 0.2.

3. The color gamut adjustment method for a projection device according to claim 1, wherein a method for adjusting the adjustable element comprises:
adjusting a position of the adjustable element by a motor, wherein a positional displacement step size of the adjustable element controlled by the motor ranges from 0.05 mm to 0.5 mm.

4. The color gamut adjustment method for a projection device according to claim 1, further comprising:
adjusting at least one of current intensity and illumination time of a light source according to the detection instruction or the driving instruction, such that when adjusting the current intensity of the light source, a relative current value of the first color light source in a second mode is greater than the relative current value of the first color light source in a first mode, and when adjusting the illumination time of the light source, a proportion of illumination time of the first color light source in the second mode within one cycle is increased compared to the first mode, wherein the first mode corresponds to a first color light within a first color gamut, and the second mode corresponds to a first color light within a second color gamut.

5. A projection device, comprising:
a light source, configured to emit source light, the source light comprising at least one of red light, green light, and blue light;
an adjustable element, configured to filter a first color light in the source light,
such that under a condition that a detection instruction or a driving instruction satisfies a first preset condition, a first color light within a first color gamut is obtained after being filtered by the adjustable element, and
under a condition that the detection instruction or the driving instruction satisfies a second preset condition, a first color light within a second color gamut is obtained after being filtered by the adjustable element, a requirement for projection luminance of the second preset condition being lower than that of the first preset condition, the first color light comprising at least one of red light, green light, and blue light, wherein
under a condition that the first color light comprises red light, a chromaticity coordinate x_{R1} of the red light within the first color gamut is less than a chromaticity coordinate x_{R2} of the red light within the second color gamut, and a chromaticity coordinate y_{R1} of the red light within the first color gamut is greater than a chromaticity coordinate y_{R2} of the red light within the second color gamut,
under a condition that the first color light comprises green light, a chromaticity coordinate x_{B1} of the green light within the first color gamut is greater than a chromaticity coordinate x_{G2} of the green light within the second color gamut, and a chromaticity coordinate y_{G1} of the green light within the first color gamut is less than a chromaticity coordinate y_{G2} of the green light within the second color gamut,
under a condition that the first color light comprises blue light, a chromaticity coordinate x_{B1} of the blue light within the first color gamut is greater than a chromaticity coordinate x_{B2} of the blue light within the second color gamut, and a chromaticity coordinate y_{B1} of the blue light within the first color gamut is greater than a chromaticity coordinate y_{B2} of the blue light within the second color gamut;
a light homogenizing element, configured to homogenize the source light; and
a spatial light modulator, configured to modulate the homogenized source light according to image data to produce image light, **characterized in that**
the adjustable element at least comprises a first region and a second region, an energy transmission ratio in the first region being higher than an energy transmission ratio in the second region, wherein
under a condition that the detection instruction or the driving instruction satisfies the first preset condition, the first color light entirely passes through the first region, and under a condition that the detection instruction or driving instruction satisfies the second preset condition, the first color light entirely passes through the second region;
under a condition that the detection instruction or the driving instruction satisfies a third preset condition, a part of the first color light passes through the first region of the adjustable element, and a part of the first color light passes through the second region of the adjustable element, such that the first color light filtered by the adjustable element at least comprises a first part and a second part, wherein the first part and the second part have different energies, and the third preset condition is an intermediate condition between the first preset condition and the second preset condition.

6. The projection device according to claim 5, wherein the adjustable element is located between the light source and the light homogenizing element.

7. The projection device according to claim 5, wherein the adjustable element is perpendicular to an optical axis direction.

8. The projection device according to claim 5, wherein
the adjustable element comprises a low-pass high-blocking film;
under a condition that the first color light comprises red light, a first cut-off wavelength range of the adjustable element ranges from 620 nm to 680 nm;
under a condition that the first color light comprises green light, a second cut-off wavelength range of the adjustable element ranges from 592 nm to 660 nm;
under a condition that the first color light comprises blue light, a third cut-off wavelength range of the adjustable element ranges from 500 nm to 660 nm.

9. The projection device according to claim 5, wherein
the adjustable element comprises a high-pass low-blocking film;
under a condition that the first color light comprises red light, a first cut-off wavelength range of the adjustable element ranges from 420 nm to 590 nm;
under a condition that the first color light comprises green light, a second cut-off wavelength range of the adjustable element ranges from 420 nm to 565nm;
under a condition that the first color light comprises blue light, a third cut-off wavelength range of the adjustable element ranges from 420 nm to 465nm.

10. The projection device according to claim 5, further comprising:
a light source control module, configured to adjust at least one of current intensity and illumination time of a light source, such that when adjusting the current intensity of the light source, a relative current value of the first color light source in a second mode is greater than the relative current value of the first color light source in a first mode, and when adjusting the illumination time of the light source, a proportion of illumination time of the first color light source in the second mode within one cycle is increased compared to the first mode, wherein the first mode corresponds to a first color light within a first color gamut, and the second mode corresponds to a first color light within a second color gamut.

## Patentansprüche

1. Verfahren zur Anpassung eines Farbumfangs für eine Projektionseinrichtung nach Anspruch 5, umfassend:
Erfassen (S1001) einer Erfassungsanweisung oder einer Ansteuerungsanweisung; und
Einstellen (S1002) eines einstellbaren Elements gemäß der Erfassungsanweisung oder der Ansteuerungsanweisung, sodass ein erstes Farblicht innerhalb eines ersten Farbumfangs nach dem Filtern durch das einstellbare Element erhalten wird, wenn die Erfassungsanweisung oder
die Ansteuerungsanweisung eine erste voreingestellte Bedingung erfüllt, und ein erstes Farblicht innerhalb eines zweiten Farbumfangs nach dem Filtern durch das einstellbare Element erhalten wird, wenn die Erfassungsanweisung oder die Ansteuerungsanweisung eine zweite voreingestellte Bedingung erfüllt, wobei eine Anforderung der zweiten voreingestellten Bedingung an eine Projektionsleuchtdichte geringer ist als eine Anforderung der ersten voreingestellten Bedingung an eine Projektionsleuchtdichte, wobei das erste Farblicht mindestens eines aus rotem Licht, grünem Licht und blauem Licht umfasst,
wobei Folgendes gilt: wenn das erste Farblicht rotes Licht umfasst, eine Farbortkoordinate xR1 des roten Lichts innerhalb des ersten Farbumfangs kleiner ist als eine Farbortkoordinate xR2 des roten Lichts innerhalb des zweiten Farbumfangs und eine Farbortkoordinate yR1 des roten Lichts innerhalb des ersten Farbumfangs größer ist als eine Farbortkoordinate yR2 des roten Lichts innerhalb des zweiten Farbumfangs,
wenn das erste Farblicht grünes Licht umfasst, eine Farbortkoordinate xG1 des grünen Lichts innerhalb des ersten Farbumfangs größer ist als eine Farbortkoordinate xG2 des grünen Lichts innerhalb des zweiten Farbumfangs und eine Farbortkoordinate yG1 des grünen Lichts innerhalb des ersten Farbumfangs kleiner ist als eine Farbortkoordinate yG2 des grünen Lichts innerhalb des zweiten Farbumfangs,
wenn das erste Farblicht blaues Licht umfasst, eine Farbortkoordinate xB1 des blauen Lichts innerhalb des ersten Farbumfangs größer ist als eine Farbortkoordinate xB2 des blauen Lichts innerhalb des zweiten Farbumfangs und eine Farbortkoordinate yB1 des blauen Lichts innerhalb des ersten Farbumfangs größer ist als eine Farbortkoordinate yB2 des blauen Lichts innerhalb des zweiten Farbumfangs,
**dadurch gekennzeichnet, dass** das Verfahren ferner umfasst:
Veranlassen, dass ein durch das einstellbare Element gefiltertes erstes Farblicht mindestens einen ersten Teil und einen zweiten Teil umfasst, wenn die Erfassungsanweisung oder die Ansteuerungsanweisung eine dritte voreingestellte Bedingung erfüllt, wobei der erste Teil und der zweite Teil unterschiedliche Energien aufweisen und die dritte voreingestellte Bedingung eine Zwischenbedingung zwischen der ersten voreingestellten Bedingung und der zweiten voreingestellten Bedingung ist.

2. Verfahren zur Anpassung eines Farbumfangs für eine Projektionseinrichtung nach Anspruch 1, wobei Folgendes gilt:
wenn das erste Farblicht rotes Licht umfasst, 0,55 ≤ xR1 ≤ 0,72, 0,2 ≤ yR1 ≤ 0,5, xR2 > 0,6, yR2 < 0,4;
wenn das erste Farblicht grünes Licht umfasst, 0,23 ≤ xG1 ≤ 0,31, 0,60 ≤ yG1 ≤ 0,66, xG2 < 0,28, yG2 > 0,64;
wenn das erste Farblicht blaues Licht umfasst, 0,1 ≤ xB1 ≤ 0,3, 0,01 ≤ yB1 ≤ 0,5, xB2 < 0,15, yB2 < 0,2.

3. Verfahren zur Anpassung eines Farbumfangs für eine Projektionseinrichtung nach Anspruch 1, wobei ein Verfahren zum Einstellen des einstellbaren Elements umfasst:
Einstellen einer Position des einstellbaren Elements durch einen Motor, wobei eine Positionsverschiebungsschrittweite des einstellbaren Elements, die durch den Motor gesteuert wird, 0,05 mm bis 0,5 mm beträgt.

4. Verfahren zur Anpassung eines Farbumfangs für eine Projektionseinrichtung nach Anspruch 1, ferner umfassend:
Einstellen mindestens eines aus einer Stromstärke und einer Leuchtdauer einer Lichtquelle gemäß der Erfassungsanweisung oder der Ansteuerungsanweisung, sodass beim Einstellen der Stromstärke der Lichtquelle ein relativer Stromwert der ersten Farblichtquelle in einem zweiten Modus größer ist als ein relativer Stromwert der ersten Farblichtquelle in einem ersten Modus, und beim Einstellen der Leuchtdauer der Lichtquelle ein Anteil der Leuchtdauer der ersten Farblichtquelle in dem zweiten Modus innerhalb eines Zyklus gegenüber dem ersten Modus erhöht ist, wobei der erste Modus einem ersten Farblicht innerhalb eines ersten Farbumfangs entspricht und der zweite Modus einem ersten Farblicht innerhalb eines zweiten Farbumfangs entspricht.

5. Projektionseinrichtung, umfassend:
eine Lichtquelle, die dazu ausgelegt ist, Quellenlicht auszusenden, wobei das Quellenlicht mindestens eines aus rotem Licht, grünem Licht und blauem Licht umfasst;
ein einstellbares Element, das dazu ausgelegt ist, ein erstes Farblicht in dem Quellenlicht zu filtern,
sodass ein erstes Farblicht innerhalb eines ersten Farbumfangs nach dem Filtern durch das einstellbare Element erhalten wird, wenn eine Erfassungsanweisung oder eine Ansteuerungsanweisung eine erste voreingestellte Bedingung erfüllt, und
sodass ein erstes Farblicht innerhalb eines zweiten Farbumfangs nach dem Filtern durch das einstellbare Element erhalten wird, wenn die Erfassungsanweisung oder die Ansteuerungsanweisung eine zweite voreingestellte Bedingung erfüllt, wobei eine Anforderung der zweiten voreingestellten Bedingung an eine Projektionsleuchtdichte geringer ist als eine Anforderung der ersten voreingestellten Bedingung an eine Projektionsleuchtdichte, wobei das erste Farblicht mindestens eines aus rotem Licht, grünem Licht und blauem Licht umfasst und Folgendes gilt:
wenn das erste Farblicht rotes Licht umfasst, eine Farbortkoordinate xR1 des roten Lichts innerhalb des ersten Farbumfangs kleiner ist als eine Farbortkoordinate xR2 des roten Lichts innerhalb des zweiten Farbumfangs und eine Farbortkoordinate yR1 des roten Lichts innerhalb des ersten Farbumfangs größer ist als eine Farbortkoordinate yR2 des roten Lichts innerhalb des zweiten Farbumfangs,
wenn das erste Farblicht grünes Licht umfasst, eine Farbortkoordinate xG1 des grünen Lichts innerhalb des ersten Farbumfangs größer ist als eine Farbortkoordinate xG2 des grünen Lichts innerhalb des zweiten Farbumfangs und eine Farbortkoordinate yG1 des grünen Lichts innerhalb des ersten Farbumfangs kleiner ist als eine Farbortkoordinate yG2 des grünen Lichts innerhalb des zweiten Farbumfangs,
wenn das erste Farblicht blaues Licht umfasst, eine Farbortkoordinate xB1 des blauen Lichts innerhalb des ersten Farbumfangs größer ist als eine Farbortkoordinate xB2 des blauen Lichts innerhalb des zweiten Farbumfangs und eine Farbortkoordinate yB1 des blauen Lichts innerhalb des ersten Farbumfangs größer ist als eine Farbortkoordinate yB2 des blauen Lichts innerhalb des zweiten Farbumfangs;
ein Lichthomogenisierungselement, das dazu ausgelegt ist, das Quellenlicht zu homogenisieren; und
ein räumlicher Lichtmodulator, der dazu ausgelegt ist, das homogenisierte Quellenlicht gemäß Bilddaten zu modulieren, um Bildlicht zu erzeugen,
**dadurch gekennzeichnet, dass**
das einstellbare Element mindestens eine erste Region und eine zweite Region umfasst, wobei ein Energietransmissionsverhältnis in der ersten Region höher ist als ein Energietransmissionsverhältnis in der zweiten Region und Folgendes gilt:
wenn die Erfassungsanweisung oder die Ansteuerungsanweisung die erste voreingestellte Bedingung erfüllt, das erste Farblicht vollständig durch die erste Region tritt, und wenn die Erfassungsanweisung oder die Ansteuerungsanweisung die zweite voreingestellte Bedingung erfüllt, das erste Farblicht vollständig durch die zweite Region tritt;
wenn die Erfassungsanweisung oder die Ansteuerungsanweisung eine dritte voreingestellte Bedingung erfüllt, ein Teil des ersten Farblichts durch die erste Region des einstellbaren Elements tritt und ein Teil des ersten Farblichts durch die zweite Region des einstellbaren Elements tritt, sodass das durch das einstellbare Element gefilterte erste Farblicht mindestens einen ersten Teil und einen zweiten Teil umfasst, wobei der erste Teil und der zweite Teil unterschiedliche Energien aufweisen und die dritte voreingestellte Bedingung eine Zwischenbedingung zwischen der ersten voreingestellten Bedingung und der zweiten voreingestellten Bedingung ist.

6. Projektionseinrichtung nach Anspruch 5, wobei das einstellbare Element zwischen der Lichtquelle und dem Lichthomogenisierungselement angeordnet ist.

7. Projektionseinrichtung nach Anspruch 5, wobei das einstellbare Element senkrecht zu einer optischen Achsrichtung angeordnet ist.

8. Projektionseinrichtung nach Anspruch 5, wobei Folgendes gilt:
das einstellbare Element einen Tiefpass-Hochsperrfilm umfasst;
wenn das erste Farblicht rotes Licht umfasst, ein erster Grenzwellenlängenbereich des einstellbaren Elements 620 nm bis 680 nm beträgt;
wenn das erste Farblicht grünes Licht umfasst, ein zweiter Grenzwellenlängenbereich des einstellbaren Elements 592 nm bis 660 nm beträgt;
wenn das erste Farblicht blaues Licht umfasst, ein dritter Grenzwellenlängenbereich des einstellbaren Elements 500 nm bis 660 nm beträgt.

9. Projektionseinrichtung nach Anspruch 5, wobei Folgendes gilt:
das einstellbare Element einen Hochpass-Tiefsperrfilm umfasst;
wenn das erste Farblicht rotes Licht umfasst, ein erster Grenzwellenlängenbereich des einstellbaren Elements 420 nm bis 590 nm beträgt;
wenn das erste Farblicht grünes Licht umfasst, ein zweiter Grenzwellenlängenbereich des einstellbaren Elements 420 nm bis 565 nm beträgt;
wenn das erste Farblicht blaues Licht umfasst, ein dritter Grenzwellenlängenbereich des einstellbaren Elements 420 nm bis 465 nm beträgt.

10. Projektionseinrichtung nach Anspruch 5, ferner umfassend:
ein Lichtquellensteuerungsmodul, das dazu ausgelegt ist, mindestens eines aus einer Stromstärke und einer Leuchtdauer einer Lichtquelle einzustellen, sodass beim Einstellen der Stromstärke der Lichtquelle ein relativer Stromwert der ersten Farblichtquelle in einem zweiten Modus größer ist als ein relativer Stromwert der ersten Farblichtquelle in einem ersten Modus, und beim Einstellen der Leuchtdauer der Lichtquelle ein Anteil der Leuchtdauer der ersten Farblichtquelle in dem zweiten Modus innerhalb eines Zyklus gegenüber dem ersten Modus erhöht ist, wobei der erste Modus einem ersten Farblicht innerhalb eines ersten Farbumfangs entspricht und der zweite Modus einem ersten Farblicht innerhalb eines zweiten Farbumfangs entspricht.

## Revendications

1. Procédé d'ajustement d'un gamut de couleurs pour un dispositif de projection selon la revendication 5, comprenant :
acquérir (S1001) une instruction de détection ou une instruction d'entraînement ; et
ajuster (S1002) un élément ajustable selon l'instruction de détection ou l'instruction d'entraînement, de sorte qu'à condition que l'instruction de détection ou l'instruction d'entraînement satisfasse à une première condition prédéfinie, une première lumière colorée dans un premier gamut de couleurs soit obtenue après avoir été filtrée par l'élément ajustable, et à condition que l'instruction de détection ou l'instruction d'entraînement satisfasse à une deuxième condition prédéfinie, une première lumière colorée dans un deuxième gamut de couleurs soit obtenue après avoir été filtrée par l'élément ajustable, une exigence de luminance de projection pour la deuxième condition prédéfinie étant inférieure à celle de la première condition prédéfinie, la première lumière colorée comprenant au moins l'une parmi la lumière rouge, la lumière verte et la lumière bleue, dans lequel
à condition que la première lumière colorée comprenne de la lumière rouge, une coordonnée de chromaticité x_{R1} de la lumière rouge dans le premier gamut de couleurs soit inférieure à une coordonnée de chromaticité x_{R2} de la lumière rouge dans le deuxième gamut de couleurs, et une coordonnée de chromaticité y_{R1} de la lumière rouge dans le premier gamut de couleurs soit supérieure à une coordonnée de chromaticité y_{R2} de la lumière rouge dans le deuxième gamut de couleur,
à condition que la première lumière colorée comprenne de la lumière verte, une coordonnée de chromaticité x_{G1} de la lumière verte dans le premier gamut de couleurs soit supérieure à une coordonnée de chromaticité x_{G2} de la lumière verte dans le deuxième gamut de couleurs, et une coordonnée de chromaticité y_{G1} de la lumière verte dans le premier gamut de couleurs soit inférieure à une coordonnée de chromaticité y_{G2} de la lumière verte dans le deuxième gamut de couleur,
à condition que la première lumière colorée comprenne de la lumière bleue, une coordonnée de chromaticité x_{B1} de la lumière bleue dans le premier gamut de couleurs soit supérieure à une coordonnée de chromaticité x_{B2} de la lumière bleue dans le deuxième gamut de couleurs, et une coordonnée de chromaticité y_{B1} de la lumière bleue dans le premier gamut de couleurs soit supérieure à une coordonnée de chromaticité y_{B2} de la lumière bleue dans le deuxième gamut de couleur,
**caractérisé en ce que**, le procédé comprend en outre :
amener une première lumière colorée filtrée par l'élément ajustable à comprendre au moins une première partie et une deuxième partie à condition que l'instruction de détection ou l'instruction d'entraînement satisfasse à une troisième condition prédéfinie, la première partie et la deuxième partie ayant des énergies différentes, et la troisième condition prédéfinie étant une condition intermédiaire entre la première condition prédéfinie et la deuxième condition prédéfinie.

2. Procédé d'ajustement d'un gamut de couleurs pour un dispositif de projection selon la revendication 1, dans lequel
à condition que la première lumière colorée comprenne de la lumière rouge, 0,55 ≤ x_{R1} ≤ 0,72, 0,2 ≤ y_{R1} ≤ 0,5, x_{R2} > 0,6, y_{R2} < 0,4 ;
à condition que la première lumière colorée comprenne de la lumière verte, 0,23 ≤ x_{G1} ≤ 0,31, 0,60 ≤ y_{G1} ≤ 0,66, x_{G2} < 0,28, y_{G2} > 0,64 ; et
à condition que la première lumière colorée comprenne de la lumière bleue, 0,1 ≤ x_{B1} ≤ 0,3, 0,01 ≤ y_{B1} ≤ 0,5, x_{B2} < 0,15, y_{B2} < 0,2.

3. Procédé d'ajustement d'un gamut de couleurs pour un dispositif de projection selon la revendication 1, dans lequel un procédé d'ajustement de l'élément ajustable comprend :
ajuster une position de l'élément ajustable à l'aide d'un moteur, une taille de pas de déplacement de position de l'élément ajustable contrôlée par le moteur variant de 0,05 mm à 0,5 mm.

4. Procédé d'ajustement d'un gamut de couleurs pour un dispositif de projection selon la revendication 1, comprenant en outre :
ajuster au moins l'une d'une intensité de courant et d'un temps d'illumination d'une source de lumière selon l'instruction de détection ou l'instruction d'entraînement, de sorte que lors de l'ajustement de l'intensité de courant de la source de lumière, une valeur de courant relative de la première source de lumière colorée en deuxième mode soit supérieure à la valeur de courant relative de la première source de lumière colorée en premier mode, et que lors de l'ajustement du temps d'illumination de la source de lumière, une proportion de temps d'illumination de la première source de lumière colorée en deuxième mode dans un cycle soit augmentée par rapport au premier mode, le premier mode correspondant à une première lumière colorée dans un premier gamut de couleurs, et le deuxième mode correspondant à une première lumière colorée dans un deuxième gamut de couleurs.

5. Dispositif de projection, comprenant :
une source de lumière, configurée pour émettre une lumière source, la lumière source comprenant au moins l'une parmi la lumière rouge, la lumière verte et la lumière bleue ;
un élément ajustable, configuré pour filtrer une première lumière colorée dans la lumière source,
de sorte qu'à condition qu'une instruction de détection ou une instruction d'entraînement satisfasse à une première condition prédéfinie, une première lumière colorée dans un premier gamut de couleurs soit obtenue après avoir été filtrée par l'élément ajustable, et
à condition que l'instruction de détection ou l'instruction d'entraînement satisfasse à une deuxième condition prédéfinie, une première lumière colorée dans un deuxième gamut de couleurs soit obtenue après avoir été filtrée par l'élément ajustable, une exigence de luminance de projection pour la deuxième condition prédéfinie étant inférieure à celle de la première condition prédéfinie, la première lumière colorée comprenant au moins l'une parmi la lumière rouge, la lumière verte et la lumière bleue, dans lequel
à condition que la première lumière colorée comprenne de la lumière rouge, une coordonnée de chromaticité x_{R1} de la lumière rouge dans le premier gamut de couleurs soit inférieure à une coordonnée de chromaticité x_{R2} de la lumière rouge dans le deuxième gamut de couleurs, et une coordonnée de chromaticité y_{R1} de la lumière rouge dans le premier gamut de couleurs soit supérieure à une coordonnée de chromaticité y_{R2} de la lumière rouge dans le deuxième gamut de couleur,
à condition que la première lumière colorée comprenne de la lumière verte, une coordonnée de chromaticité x_{G1} de la lumière verte dans le premier gamut de couleurs soit supérieure à une coordonnée de chromaticité x_{G2} de la lumière verte dans le deuxième gamut de couleurs, et une coordonnée de chromaticité y_{G1} de la lumière verte dans le premier gamut de couleurs soit inférieure à une coordonnée de chromaticité y_{G2} de la lumière verte dans le deuxième gamut de couleur,
à condition que la première lumière colorée comprenne de la lumière bleue, une coordonnée de chromaticité x_{B1} de la lumière bleue dans le premier gamut de couleurs soit supérieure à une coordonnée de chromaticité x_{B2} de la lumière bleue dans le deuxième gamut de couleurs, et une coordonnée de chromaticité y_{B1} de la lumière bleue dans le premier gamut de couleurs soit supérieure à une coordonnée de chromaticité y_{B2} de la lumière bleue dans le deuxième gamut de couleur ;
un élément d'homogénéisation de lumière, configuré pour homogénéiser la lumière source ; et
un modulateur spatial de lumière, configuré pour moduler la lumière source homogénéisée selon des données d'image afin de produire une lumière d'image, **caractérisé en ce que**
l'élément ajustable comprend au moins une première région et une deuxième région, un taux de transmission d'énergie dans la première région étant supérieure à un taux de transmission d'énergie dans la deuxième région, dans lequel,
à condition que l'instruction de détection ou l'instruction d'entraînement satisfasse à la première condition prédéfinie, la première lumière colorée passe complètement à travers la première région, et à condition que l'instruction de détection ou l'instruction d'entraînement satisfasse à la deuxième condition prédéfinie, la première lumière colorée passe complètement à travers la deuxième région ;
à condition que l'instruction de détection ou l'instruction d'entraînement satisfasse à une troisième condition prédéfinie, une partie de la première lumière colorée passe à travers la première région de l'élément ajustable, et une partie de la première lumière colorée passe à travers la deuxième région de l'élément ajustable, de sorte que la première lumière colorée filtrée par l'élément ajustable comprenne au moins une première partie et une deuxième partie, la première partie et la deuxième partie ayant des énergies différentes, et la troisième condition prédéfinie étant une condition intermédiaire entre la première condition prédéfinie et la deuxième condition prédéfinie.

6. Dispositif de projection selon la revendication 5, dans lequel l'élément ajustable est situé entre la lumière source et l'élément d'homogénéisation de lumière.

7. Dispositif de projection selon la revendication 5, dans lequel l'élément ajustable est perpendiculaire à une direction d'axe optique.

8. Dispositif de projection selon la revendication 5, dans lequel
l'élément ajustable comprend un film passe-bas à blocage élevé ;
à condition que la première lumière colorée comprenne de la lumière rouge, une première plage de longueurs d'onde de coupure de l'élément ajustable est comprise entre 620 nm et 680 nm ;
à condition que la première lumière colorée comprenne de la lumière verte, une deuxième plage de longueurs d'onde de coupure de l'élément ajustable est comprise entre 592 nm et 660 nm ; et
à condition que la première lumière colorée comprenne de la lumière bleue, une troisième plage de longueurs d'onde de coupure de l'élément ajustable est comprise entre 500 nm et 660 nm.

9. Dispositif de projection selon la revendication 5, dans lequel
l'élément ajustable comprend un film passe-haut à faible blocage ;
à condition que la première lumière colorée comprenne de la lumière rouge, une première plage de longueurs d'onde de coupure de l'élément ajustable est comprise entre 420 nm et 590 nm ;
à condition que la première lumière colorée comprenne de la lumière verte, une deuxième plage de longueurs d'onde de coupure de l'élément ajustable est comprise entre 420 nm et 565 nm ; et
à condition que la première lumière colorée comprenne de la lumière bleue, une troisième plage de longueurs d'onde de coupure de l'élément ajustable est comprise entre 420 nm et 465 nm.

10. Dispositif de projection selon la revendication 5, comprenant en outre :
un module de contrôle de source de lumière, configuré pour ajuster au moins l'une d'une intensité de courant et d'un temps d'illumination d'une source de lumière, de sorte que lors de l'ajustement de l'intensité de courant de la source de lumière, une valeur de courant relative de la première source de lumière colorée en deuxième mode soit supérieure à la valeur de courant relative de la première source de lumière colorée en premier mode, et que lors de l'ajustement du temps d'illumination de la source de lumière, une proportion de temps d'illumination de la première source de lumière colorée en deuxième mode dans un cycle soit augmentée par rapport au premier mode, le premier mode correspondant à une première lumière colorée dans un premier gamut de couleurs, et le deuxième mode correspondant à une première lumière colorée dans un deuxième gamut de couleurs.
